# EUROPÄISCHE PATENTSCHRIFT

(11) **EP 0 574 811 B1**
(45) Veröffentlichungstag und Bekanntmachung des Hinweises auf die Patenterteilung: **02.10.1996**
(21) Anmeldenummer: 93109198.7
(22) Anmeldetag: 08.06.1993
(51) Int. Cl.: F16L 29/00, F16L 59/06

(54) **Verfahren zum Kaltfahren eines Speicherbehälters**
Method for cooling a storage container
Procédé pour faire fonctionner à froid un réservoir

(30) Priorität: 17.06.1992 DE 4219912
(43) Veröffentlichungstag der Anmeldung: 22.12.1993
(73) Patentinhaber: Linde Aktiengesellschaft, D-65189 Wiesbaden (DE)
(72) Erfinder: Seifers, Hilmar, Dipl.-Ing., W-8000 München 90 (DE)
(74) Vertreter: Kasseckert, Rainer

(56) Entgegenhaltungen:
- DE-A- 3 338 241
- FR-A- 2 672 960
- US-A- 3 034 319
- US-A- 3 068 026
- US-A- 3 152 452
- US-A- 4 335 747

## Beschreibung

Die Erfindung betrifft ein Verfahren zum Kaltfahren eines Speicherbehälters für ein kryogenes Medium, vorzugsweise Wasserstoff, mit den Merkmalen des Anspruches 1.

Im folgenden werden als Bezeichnungen für gasförmigen bzw. flüssigen Wasserstoff die Abkürzungen GH₂ (Gaseous Hydrogen) bzw. LH₂ (Liquid Hydrogen) verwendet.

Wasserstoff gewinnt gegenwärtig durch zunehmenden Energiebedarf und gestiegenes Umweltbewußtsein als Energieträger immer mehr an Bedeutung. So sind Überlegungen im Gange, in naher Zukunft Flugzeuge, Lastkraftwagen, Busse sowie Personenkraftwagen mittels mit Wasserstoff betriebener Turbinen bzw. Motoren anzutreiben. Die Speicherung des Wasserstoffs an Bord der obengenannten Verkehrsmittel ist dabei in flüssiger Form am sinnvollsten. Zwar muß der Wasserstoff dazu auf etwa 25 K abgekühlt und auf dieser Temperatur gehalten werden, was nur durch entsprechende Isoliermaßnahmen an den Speicherbehältern bzw. -tanks zu erreichen ist, doch ist eine Speicherung in gasförmigem Zustand aufgrund der geringen Dichte von GH₂ in der Regel in den obengenannten Verkehrsmitteln nicht realisierbar. Aus sicherheitstechnischen Gründen bedarf es bei wasserstoffgetriebenen Fahrzeugen weiterer Sicherheitsmaßnahmen - auf die hier jedoch nicht näher eingegangen wird - so daß die notwendige Isolation des Speicherbehälters nicht nur dem Aufrechthalten der Temperatur dient. Einen Überblick über den aktuellen Stand der Wasserstoff-Entwicklung im Hinblick auf seine Verwendung als Kraftstoff geben z.B. die Artikel "Flüssiger Wasserstoff als Motorenkraftstoff der Zukunft", Prof. Dr. W. Peschka, Sonderdruck aus "Maschinenwelt-Elektrotechnik", 43. Jg, Heft 8/9-1988 und "Liquid Hydrogen Fueled Automobiles: On-Board and Stationary Cryogenic Installations", R. Ewald, Cryogenics 1990, Vol. 30 Sept. Supplement.

Derartige Kupplungen wie oben beschrieben, die auch als "Johnston-Kupplung" bezeichnet werden, sind allgemein in kryogenen Leitungssystemen einsetzbar, so zum Beispiel in Leitungssystemen, in denen Helium oder Wasserstoff kryogen geführt ist. Durch das Leitungsendrohr, das zwecks Vakuumisolierung doppelwandig ausgeführt ist, wird eine größere auch als "Wärmeleitlänge" bezeichnete räumliche Entfernung zwischen der Stelle, an der die mechanische Verbindung der beiden Kupplungsteile erfolgt, und der Stelle, an der der Übertritt des kryogenen Mediums von der einen in die andere Leitung erfolgt, geschaffen. Dadurch wird einer Vereisung entgegengewirkt und es werden die Verdampfungsverluste des kryogenen Mediums in der Leitung verringert. Ein derartig ausgebildeter Kupplungsstecker wird auch als "Male-Teil" bezeichnet. Die dazu korrespondierende Bezeichnung für die Kupplungsdose ist "Female-Teil". Bedingt durch den Aufbau einer solchen Kupplung ist es nach dem Zusammenkuppeln zweier Leitungen zunächst nötig, die in den Leitungen noch vorhandene Umgebungsluft zu entfernen, was durch Evakuieren der Leitung und anschließendes Spülen mit einem geeigneten Medium, beispielsweise mit Helium, geschieht, wobei dies mehrmals wiederholt wird. Daran anschließend werden die miteinander verbundenen Leitungen kaltgefahren, d.h. von dem Kryomedium, das transportiert werden soll, durchströmt, wobei dieses zum Kaltfahren der Leitungen und anderer Anlagenteile benutzte Kryomedium noch nicht für den eigentlichen Verwendungszweck vorgesehen ist, d.h. beispielsweise beim Umfüllen von einem großen in einen kleinen Tank ist der kleine Tank zunächst noch geschlossen und das Kryomedium wird anderweitig weiterverwendet oder abgeblasen. Erst wenn die Leitungen eine bestimmte Temperatur erreicht haben, wird flüssiges Kryomedium in den kleinen Tank eingeleitet. Auf diese Weise ist die Gasbildung beim Transport weitgehend unterbunden. In umgekehrter Richtung müssen nach dem Ablassen des noch in den Leitungen befindlichen Kryomediums die Leitungen warmgefahren werden, um gefährliche Gemischbildungen und Betriebsstörungen durch ausfrierende Luft- und Feuchtigkeitsanteile zu vermeiden.

Es ist leicht erkennbar, daß die Handhabung von Leitungen und Leitungssystemen, die mit den beschriebenen Kupplungen versehen sind, umständlich und zeitaufwendig ist.

Aus der deutschen Patentanmeldung P 41 04 711.7 (Veröffentlichungsdatum: 20.08.1992) ist eine zweiadrige Betankungskupplung bekannt. Bei dieser zweiadrigen Betankungskupplung erfolgt das Betanken eines mit Wasserstoff betriebenen Kraftfahrzeuges mit LH₂ sowie die gleichzeitige Entnahme von GH₂ über ein und dieselbe Betankungskupplung, weshalb die Betankungskupplung mindestens zwei Leitungen aufweisen muß. Dies stellt im Gegensatz zu der bisher üblichen Verwendung zweier Johnston-Kupplungen bereits eine erhebliche Vereinfachung der Betankungsprozedur dar.

Aus der US-PS 4,335,747 ist eine einadrige Betankungskupplung für eine vakuumisolierte Rohrleitung bekannt, die zur Führung eines kryogenen Mediums vorgesehen ist. Diese Kupplung besteht aus einem Kupplungsstecker und einer Kupplungsdose, wobei sich im zusammengekuppelten Zustand ein Leitungsendrohr des Kupplungssteckers, das zur Führung des kryogenen Mediums vorgesehen ist, über die Trennebene hinaus in die Kupplungsdose hinein erstreckt. Sowohl der Kupplungsstecker als auch die Kupplungsdose sind unmittelbar benachbart der Trennebene jeweils mit einem Absperrorgan versehen und das Leitungsendrohr ist in axialer Richtung beweglich zum Kupplungsstecker und bis hinter das steckerseitige Absperrorgan zurückziehbar.

Aus der im Vergleich zu einer zweiadrigen Betankungskupplung kompakteren Bauweise resultiert eine wesentliche Kosteneinsparung sowie eine erhöhte Betriebssicherheit. Darüber hinaus entfallen die bei einer zweiadrigen Betankungskupplung am kalten Kupplungsende benötigten Dichtungen der beiden Leitungen zueinander, die bisher potentielle Leckstellen und Verschleißteile darstellten. Ferner kann bei der Verwendung einer einadrigen Betankungskupplung eine vakuumisolierte Abgasleitung vom Speicherbehälter zur Kupplungsdose innerhalb des Kraftfahrzeuges entfallen.

Das bisher praktizierte Verfahren zum Kaltfahren eines Speicherbehälters ist ein Durchflußverfahren, bei dem GH₂ oder LH₂ über eine Leitung der Betankungskupplung (bzw. über eine der Johnston-Kupplungen) in den Speicherbehälter eingeführt und über die zweite Leitung (bzw. die zweite Johnston-Kupplung) über das Druckhalteventil abgegeben wird. Dieses Verfahren hat jedoch den Nachteil, daß ein zusätzlicher Leitungsanschluß am Druckhalteventil, also die Verwendung zweier Johnston-Kupplungen oder einer zweiadrigen Betankungskupplung erforderlich wird, um ein sicheres Ableiten des GH₂'s über einen Kamin zu gewährleisten.

Aufgabe der vorliegender Erfindung ist es, ein Verfahren zum Kaltfahren eines Speicherbehälters für ein kryogenes Medium anzugeben, das den Wasserstoffverbrauch senkt.

Dies wird erfindungsgemäß durch ein Verfahren mit den Merkmalen des Anspruches 1 erreicht.

Die Erfindung weiterbildend wird vorgeschlagen, daß als kryogenes Medium für den Befüll- und Entnahmevorgang flüssiger Stickstoff und/oder LH₂ verwendet wird.

Das Kaltfahren des Speicherbehälters im "Pilgerschrittverfahren" geschieht durch zyklisches Bedrücken des Speicherbehälters mit flüssigem Stickstoff und/oder LH₂ über die Befülleitung auf 3 bis 5 bar und nachfolgendes Entleeren über die Befülleitung auf 1 bis 1.5 bar. Der eingespeiste flüssige Stickstoff und/oder LH₂ verdampft und erwärmt sich dabei und kühlt so den Speicherbehälter auf die gewünschte Betriebstemperatur von 25 K.

Eine Ausgestaltung des erfindungsgemäßen Verfahrens ist dadurch gekennzeichnet, daß bei einem mehrmaligen Befüll- und Entnahmevorgang beim ersten Befüll- und Entnahmevorgang flüssiger Stickstoff und bei dem nachfolgenden Befüll- und Entnahmevorgang LH₂ verwendet wird.

Dazu alternativ wird vorgeschlagen, daß bei einem mehrmaligen Befüll- und Entnahmevorgang LH₂ verwendet wird.

Nach längeren Standzeiten eines Kraftfahrzeuges kann die Temperatur innerhalb des Speicherbehälters bereits beträchtlich angestiegen sein. Für eine Abkühlung von z.B. 80 K auf 25 K genügt ein Bedrück- und Entleerungszyklus mittels LH₂. Mit dem erfindungsgemäßen Verfahren ist es somit auf einfache und schnelle Art möglich, Speicherbehälter wieder kaltzufahren, die zuvor vollständig leergefahren wurden und sich dabei teilweise angewärmt haben. Dieses Rückkühlverfahren kann dem Betankungsverfahren unmittelbar vorgeschaltet und automatisiert werden.

Für das Abkühlen von Umgebungstemperatur auf Betriebstemperatur (wie dies z.B. bei Inbetriebnahme eines Speicherbehälters für Kraftfahrzeuge der Fall wäre) sind bis zu 20 "Pilgerschritte" erforderlich, wenn LH₂ als Kühlmedium verwendet wird. Bei der Abkühlung von Umgebungstemperatur auf eine Temperatur von ca. 80 K läßt sich bei der Verwendung von flüssigem Stickstoff die Zahl der Pilgerschritte reduzieren. Somit verbilligt sich das Abkühlen und es wird gleichzeitig eine gute Inertisierung des Speicherbehälters erreicht. Das Kaltfahren mit flüssigem Stickstoff hat außerdem den Vorteil, daß keine sichere Ableitung des Abgases über einen Kamin erforderlich, sondern ein freies Abströmen über das Druckhalteventil in die Atmosphäre möglich ist.

Weitere Vorteile und Einzelheiten der Erfindung werden anhand des in den Figuren schematisch dargestellten Ausführungsbeispieles erläutert. Hierbei zeigen:
- Figur 1: den Prinzipaufbau einer einadrigen Kupplung, wobei diese in einem Betankungssystem eines mit LH₂ betriebenen Kraftfahrzeuges Verwendung findet;
- Figur 2: eine Kupplung nach Figur 1 beim Spülen der Flanschung vor dem Betanken;
- Figur 3: ein Prinzipschema zum Absperrorgan des Kupplungssteckers;
- Figur 4: eine Kupplung nach Figur 1 während des Betankens.

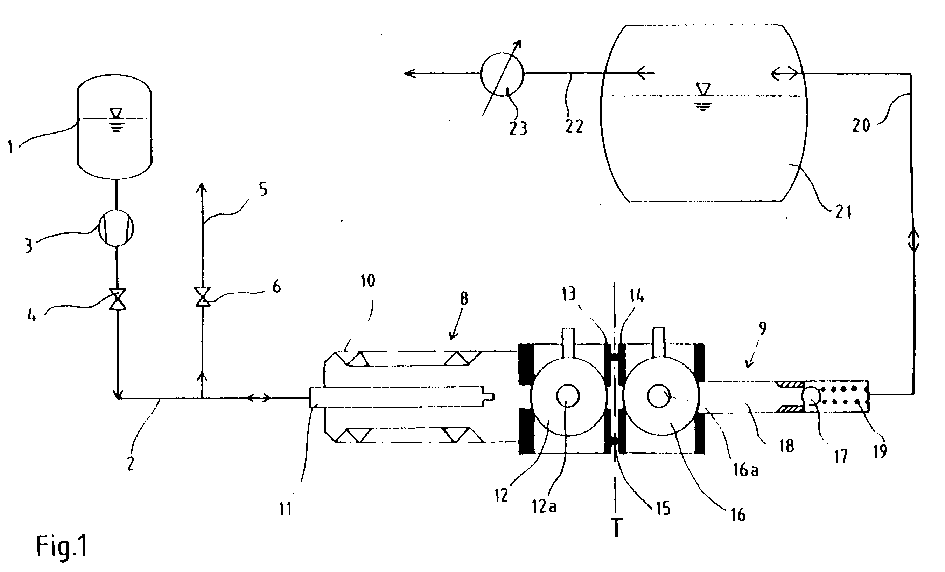

In **Figur 1** ist tankstellenseitig ein Vorratstank 1 mit LH₂ vorgesehen, an den eine Leitung 2 angeschlossen ist, in die eine Pumpe 3 und ein elektromagnetisch betätigtes Absperrventil 4 geschaltet sind. An die Leitung 2 ist eine Abblasleitung 5 angeschlossen, in der ein elektromagnetisch betätigbares Absperrventil 6 angeordnet ist. Über die Abblasleitung 5 wird LH₂ in die Atmosphäre abgegeben. Die Leitung 2 mündet im Anschluß an die Abzweigung zur Leitung 5 in das Leitungsendrohr 11, das im gezogenen Zustand im Kupplungsstecker 8 dargestellt ist. Auf eine Darstellung der Vakuumisolierung sämtlicher Leitungen ist in Figur 1 verzichtet. Das Leitungsendrohr 11 ist im Bezug auf den Kupplungsstecker 8 längsbeweglich, was durch einen Membranbalg 10 erreicht wird. Der Kupplungsstecker 8 ist mit einem als Kugelhahn 12 ausgebildeten Absperrorgan versehen, wobei die Durchgangsbohrung 12a des Kugelhahns in geöffnetem Zustand ein Ausfahren des Leitungsendrohres aus dem Kupplungsstecker 8 ermöglicht. Der Kupplungsstecker 8 ist über einen Verbindungsflansch 13 mit dem Verbindungsflansch 14 einer Kupplungsdose 9 lösbar verbunden. In der Berührungsebene der Verbindungsflansche 13 und 14, der sogenannten Trennebene T, ist eine Dichtung 15 angeordnet. Auch die Kupplungsdose 9 ist mit einem Kugelhahn 16 versehen, dessen Durchgangsbohrung 16a zur Aufnahme des Leitungsendrohres 11 vorgesehen ist. Im trennebenenfernen Bereich der Kupplungsdose 9 ist ein weiteres Absperrorgan 17 angeordnet, wobei zwischen dem Absperrorgan 17 und dem Kugelhahn 16 ein isolierender Zwischenraum 18 vorgesehen ist. Das Absperrorgan 17 ist in Richtung zur Schließstellung federbelastet (19). Das Absperrorgan 17 wird durch das in die Kupplungsdose 9 eingefahrene Leitungsendrohr geöffnet, wobei im geöffneten Zustand das Leitungsendrohr 11 mit der Leitung 20 verbunden ist. Leitung 20 stellt die Zuleitung dar, in der LH₂ in den Speicherbehältern 21 des Kraftfahrzeuges geleitet bzw. GH₂ aus dem Speicherbehälter über die Kupplung aus dem Kraftfahrzeug abgeführt werden kann.

Der Speicherbehälter 21 ist vakuumisoliert und enthält LH₂ und GH₂. Auf eine Darstellung der im Speicherbehälter vorgesehenen Apparaturen wird der Übersichtlichkeit halber verzichtet. Aus dem Speicherbehälter 21 führt eine Leitung 22 zu einem Wärmetauscher 23, in dem GH₂ und/oder LH₂ gegen Motorkühlwasser verdampft und angewärmt und dem Motor zugeführt wird.

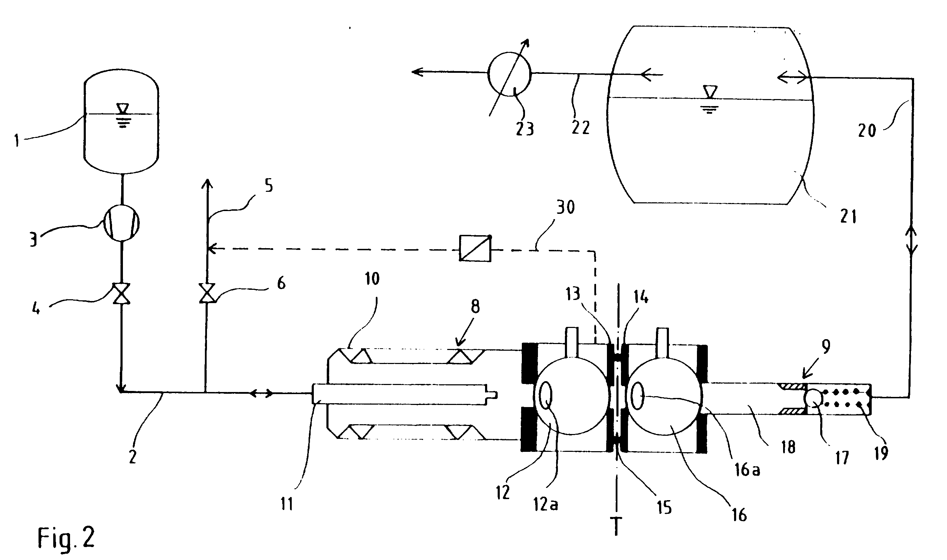

In **Figur 2** sei im Detail auf den Verfahrensablauf beim Betanken eingegangen. Figur 2 stellt den Beginn des Betankungsvorganges dar. Hierbei sind der Kupplungsstecker 8 und die Kupplungsdose 9 bereits miteinander verflanscht, jedoch sind die Kugelhähne 12 und 16 noch geschlossen und daher das Leitungsendrohr 11 in den Kupplungsstecker 8 eingefahren und das Absperrorgan 17 noch geschlossen. Der Kupplungsstecker 8 ist mit einer Entlüftungsleitung 30 (gestrichelt gezeichnet) verbunden, in der ein Rückschlagventil 31 angeordnet ist und die in die Abblasleitung 5 mündet, über die der GH₂ in die Atmosphäre abgelassen werden kann. Zum Zwecke des Entlüftens wird nun der Kugelhahn 12 etwas geöffnet. Bei offenem Absperrventil 6 kann nun GH₂ die in dem Raum zwischen dem Kupplungsstecker 8 und der Kupplungsdose 9 vorhandene Luft in die Leitung 30 verdrängt werden.

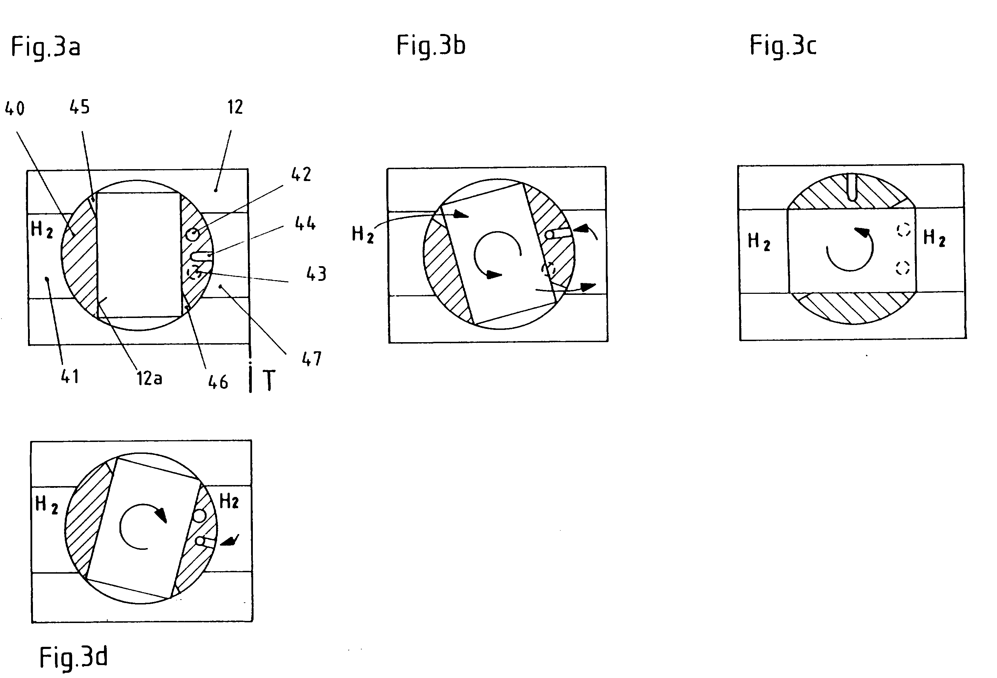

Wie dies geschieht, ist in den **Figuren 3a bis 3d** stark vereinfacht dargestellt. Figur 3a zeigt den Kugelhahn 12 des Kupplungssteckers 8 in Verschlußstellung in Draufsicht, d.h. die Durchgangsbohrung 12a des Kugelkükens 40 ist senkrecht zum entsprechenden Kanal 41 des Kugelhahns 12 angeordnet. In der hohlkugeligen Kugelküken-Aufnahme sind zwei Bohrungen 42 und 43 (verdeckt dargestellt) eingebracht, die mit der Leitung 30 in Verbindung stehen. Das Kugelküken 40 ist im Bereich zwischen den aufnahmeseitigen Bohrungen 42 und 43 mit einem Schlitz 44 versehen. Darüber hinaus sind zwei Abschrägungen 45 und 46 an diagonal gegenüberliegenden Seiten der Durchgangsbohrung 12a vorgesehen. Auf der in der Figur 3a linken Seite des Kugelkükens 40 stehe Wasserstoff an. Auf der rechten Seite liegt die Trennebene T. Wird nun das Kugelküken 40 geringfügig in Öffnungsrichtung, in diesem Beispiel entgegen dem Uhrzeigersinn, gedreht, was in Figur 3b dargestellt ist, so kommt der Schlitz 44 zur Deckung mit der Bohrung 42, während gleichzeitig die Abschrägung 45 eine Verbindung zwischen dem Kanal 41 und der Durchgangsbohrung 12a herstellt und die Abschrägung 46 eine Verbindung zwischen der Durchgangsbohrung 12a und dem Raum 47, in dem die Trennebene T liegt.

Infolgedessen strömt Wasserstoff vom Kanal 41 über die Abschrägung 45, die Durchgangsbohrung 12a und die Abschrägung 46 in den Raum 47, wo die dort vorhandene Luft verdrängt und über den Schlitz 44 in die als Spülbohrung fungierende Bohrung 42 in die Leitung 30 gedrückt wird. Dies geschieht so lange, bis nur noch Wasserstoff in dem Raum 47 vorhanden ist, dann wird das Kugelküken 70 weitergedreht, so daß die Durchgangsbohrung 12a vollständig an den Kanal 41 anschließt, was in Figur 3c dargestellt ist. In umgekehrter Richtung, d.h. zur Druckentlastung wird nach dem Drehen des Kugelkükens im Uhrzeigersinn in Schließrichtung und Erreichen der Schließrichtung ein kurzes Überdrehen vorgenommen, so daß der Schlitz 44 zur Deckung kommt mit der Bohrung 43, die damit als Druckentlastungbohrung wirkt (Figur 3d).

Ist dies geschehen, wird der kalte, mit Restflüssigkeit gefüllte Speicherbehälter 21 vor dem Befüllen über die einadrige Betankungskupplung in die Abblasleitung 5 druckentlastet, wodurch die Befülleitung sowie die einadrige Betankungskupplung kaltgefahren werden. Dadurch wird ein unerwünschter Druckanstieg im Speicherbehälter 21, verursacht durch Befüllen mit Warmgas, vermieden.

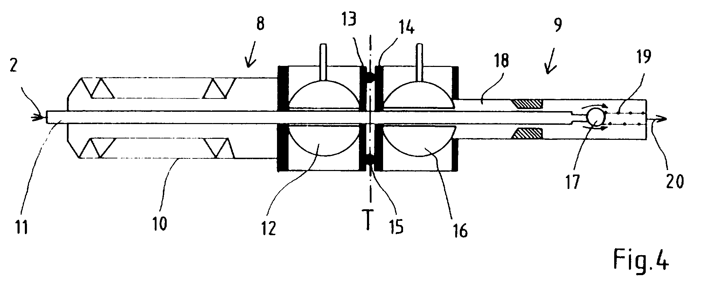

Der eigentliche Betankungsvorgang ist aus **Figur 4** ersichtlich. Hierbei ist nun auch der Kugelhahn 16 der Kupplungsdose 9 vollständig geöffnet und das Leitungsendrohr 11 bei zusammengedrücktem Membranbalg 10 voll ausgefahren, wodurch das Absperrorgan 17 geöffnet und somit die zum Speicherbehälter führende Leitung 22 über das Leitungsendrohr 11 mit der vom Tank kommenden Leitung 2 verbunden ist.

Sollte es während des Betankungsvorganges zu einem Druckanstieg innerhalb des Speicherbehälters über einen zulässigen Wert hinaus kommen, so kann eine Druckentlastung des Tanks über die Befülleitung (2, 11, 20) während des Betankungsvorganges selbst erfolgen. Dazu müßte das in den Figuren 1 und 2 ersichtliche Ventil 4 geschlossen, Ventil 6 geöffnet und der GH₂ über die Abblasleitung 5 an die Atmosphäre abgegeben werden.

## Patentansprüche

1. Verfahren zum Kaltfahren eines Speicherbehälters (21) für ein kryogenes Medium, vorzugsweise Wasserstoff, unter Verwendung einer Kupplung für eine vakuumisolierte Rohr- oder Schlauchleitung (2, 20), die zur Führung eines kryogenen Mediums vorgesehen ist, wobei die Kupplung aus einem Kupplungsstecker (8) und einer Kupplungsdose (9) besteht, sich im zusammengekuppelten Zustand ein Leitungsendrohr (11) des Kupplungssteckers (8), das zur Führung des kryogenen Mediums vorgesehen ist, über die Trennebene (T) hinaus in die Kupplungsdose (9) hinein erstreckt, der Kupplungsstecker (8) konzentrisch um die steckerseitige Leitung ein druckfestes Gehäuse (10) besitzt, in dem die Medien führende Leitung sowie deren Außenwandung flexibel im Sinne eines Membranbalgs ausgebildet ist, der Kupplungsstecker (8) und die Kupplungsdose (9) unmittelbar benachbart der Trennebene (T) jeweils mit einem Absperrorgan (12, 16) versehen sind und das Leitungsendrohr (11) in axialer Richtung beweglich zum Kupplungsstecker (8) und bis hinter das steckerseitige Absperrorgan (12) zurückziehbar ist, und wobei das Innere des Speicherbehälters (21) über die mit der Kupplung verbundene vakuumisolierte Rohr- oder Schlauchleitung (2, 20) mindestens einmal mit einem kryogenen Medium auf einen Druck von 3 bis 5 bar bedrückt und anschließend über die vakuumisolierte Rohr- oder Schlauchleitung (2, 10) bis auf einen Druck von 1 bis 1.5 bar entleert wird.

2. Verfahren nach Anspruch 1, dadurch gekennzeichnet, daß als kryogenes Medium flüssiger Stickstoff und/oder flüssiger Wasserstoff verwendet wird.

3. Verfahren nach Anspruch 1 oder 2, dadurch gekennzeichnet, daß bei einem mehrmaligen Befüll- und Entnahmevorgang beim ersten Befüll- und Entnahmevorgang flüssiger Stickstoff und bei dem nachfolgenden Befüll- und Entnahmevorgang flüssiger Wasserstoff verwendet wird.

4. Verfahren nach Anspruch 1 oder 2, dadurch gekennzeichnet, daß bei einem mehrmaligen Befüll- und Entnahmevorgang flüssiger Wasserstoff verwendet wird.

## Claims

1. Method for cooling a storage container (21) for a cryogenic medium, preferably hydrogen, with the use of a coupling for a vacuum-insulated pipe or hose line (2, 20) which is intended for guiding a cryogenic medium, the coupling consisting of a coupling connector (8) and a coupling socket (9), in the coupled state a line terminating tube (11), of the coupling connector (8), which is intended for guiding the cryogenic medium, extending beyond the parting plane (T) into the coupling socket (9), the coupling connector (8) having, concentrically around the connector-side line, a pressure-tight housing (10) in which the line that guides the media and its outer wall are designed flexibly in the manner of a membrane skin, the coupling connector (8) and the coupling socket (9) being each provided, directly next to the parting plane (T), with a shut-off member (12, 16), and the line terminating tube (11) being movable in the axial direction relative to the coupling connector (8) and being withdrawable to behind the connector-side shut-off member (12), and the interior of the storage container (21) being pressurized at least once with a cryogenic medium to a pressure of 3 to 5 bar via the vacuum-insulated tube or hose line (2, 20) connected to the coupling, and having the pressure subsequently reduced to 1 to 1.5 bar via the vaccum-insulated tube or hose line (2, 20).

2. Method according to Claim 1, characterized in that liquid nitrogen and/or liquid hydrogen is used as cryogenic medium.

3. Method according to Claim 1 or 2, characterized in that, in a multiple filling and withdrawal process, liquid nitrogen is used in the first filling and withdrawal process and liquid hydrogen is used in the subsequent filling and withdrawal process.

4. Method according to Claim 1 or 2, characterized in that, in a multiple filling and withdrawal process, liquid hydrogen is used.

## Revendications

1. Procédé pour faire fonctionner à froid un réservoir (21) pour un fluide cryogénique, de préférence l'hydrogène, en utilisant un couplage pour une conduite en tube ou en tuyau souple (2, 20) isolée au vide, qui est prévue pour conduire un fluide cryogénique, dans lequel le couplage est composé d'une fiche de couplage (8) et d'une douille de couplage (9), un tube d'extrémité de conduite (11) de la fiche de couplage (8), qui est prévu pour conduire un fluide cryogénique, s'étend au-delà du plan de séparation (T) jusque dans la douille de couplage (9), la fiche de couplage (8) possède un boîtier (10) résistant à la pression en position concentrique autour de la conduite du côté de la fiche, dans lequel la conduite conduisant des fluides ainsi que la paroi extérieure de celle-ci sont flexibles au sens d'un soufflet à membrane, la fiche de couplage (8) et la douille de couplage (9) sont chacune pourvues d'un organe d'arrêt (12, 16) à proximité immédiate du plan de séparation (T) et le tube d'extrémité de conduite (11) est rétractable de façon mobile en direction axiale vers la fiche de couplage (8) et jusque derrière l'organe d'arrêt (12) du côté de la fiche, et dans lequel l'intérieur du réservoir (21) est porté au moins une fois à une pression de 3 à 5 bar avec un fluide cryogénique, par l'intermédiaire de la conduite en tube ou en tuyau souple (2, 20) isolée au vide raccordée par le couplage, et est ensuite vidé par l'intermédiaire de la conduite en tube ou en tuyau souple (2, 20) jusqu'à une pression de 1 à 1,5 bar.

2. Procédé suivant la revendication 1, caractérisé en ce que l'on utilise comme fluide cryogénique l'azote liquide et/ou l'hydrogène liquide.

3. Procédé suivant la revendication 1 ou 2, caractérisé en ce que, lors d'une opération multiple de remplissage et de prélèvement, on utilise l'azote liquide pour la première opération de remplissage et de prélèvement et l'hydrogène liquide pour l'opération de remplissage et de prélèvement suivante.

4. Procédé suivant la revendication 1 ou 2, caractérisé en ce que l'on utilise l'hydrogène liquide lors d'une opération multiple de remplissage et de prélèvement.
